# EUROPEAN PATENT APPLICATION

(11) **EP 2 873 898 A1**
(43) Date of publication of application: **20.05.2015**
(21) Application number: 14193077.6
(22) Date of filing: 13.11.2014
(51) Int. Cl.: F16L 11/08, B29D 23/00, F16L 11/12

(54) **Flexible tubular hose and manufacturing method**

(30) Priority: 13.11.2013 ES 201331650
(71) Applicant: Technosil GmbH, 8302 Kloten - Zurich (CH)
(72) Inventor: Fernandez Esmerats, Joan, 08230 MATADEPERA (ES); Sigler Poveda, Javier, 08206 SABADELL (ES); Oliver Pradas, Antoni, 08207 SABADELL (ES)
(74) Representative: Sugrañes Patentes y Marcas

(57) **Abstract**

Flexible tubular hose intended for the transport of fluids in industrial applications that comprises an inner tube of a flexible polymeric material forming the inner watertight surface of the hose, on which at least a first concentric reinforcement layer, a second metallic reinforcement layer with a deformable helicoidal structure and surrounding the first layer, and an outer continuous layer of the same flexible polymeric material than the inner tube, are arranged. Between the second metallic reinforcement layer and the outer layer a plurality of deformable metallic filiform elements is circumferentially arranged and extends along the hose with the capacity to move in the axial direction of the hose and with the capacity for plastic deformation, such that the hose is susceptible of deforming under the application of a force and of maintaining said deformation once said force is no longer.

## Description

### Technical sector of the invention

The present invention relates to flexible tubular hose intended for the transport of fluids in industrial installations, whether they are liquids or gases. The flexible tubular hose comprises an inner tube made of a flexible polymeric material that forms the inner watertight surface of the hose. On the inner tube, at least a first concentric reinforcement layer and a second metallic reinforcement layer with a deformable helicoidal structure and surrounding the first layer, are arranged, the hose being finished with an outer layer made of the same flexible polymeric material than the inner tube.

### Background of the invention

The use of flexible tubular hoses, in their majority made of silicone, is broadly widespread in the industrial sector for the transport of different kinds of fluids that may be subjected to extreme temperatures and high pressures.

One example of a flexible tubular hose is the one described in the utility model ES1040188U, formed by a first tubular layer, forming the inner surface of the tube, as of which four concentric layers with the same thickness among them are arranged, which thickness is lower than the thickness of the first tubular layer, constituted of a material composed of silicone and a polyester fabric. At both sides of the silicone layer, flanked by the layers of polyester fabric, metallic reinforcements are concentrically arranged, formed by wires with a helicoidal structure with different radius. The last layer of the hose, the outer layer, is also made of silicone.

Despite the flexibility presented by the hoses of the type described above, the layout of the hoses within the industrial installations and the arrangement of the different pieces of equipment to which the hoses supply with, fluid require in many cases for the hoses to contemplate considerable changes of direction within the same length of the hose, for which the hoses must be manufactured in specific molds to adopt a particular geometry for each case, given that, even though they are flexible hoses which shape may be altered by folding, this shape does not remain once the hose is released.

This way, the need to provide hoses adaptable to different layouts at each time, which is easy to install and manufacture, is made evident.

### Explanation of the invention

With the purpose of providing a solution to the problems proposed above, the invention discloses a flexible tubular hose intended for the transport of fluids in industrial installations. The hose comprises an inner tube made of a flexible polymeric material forming the inner watertight surface of the hose, on which at least a first concentric reinforcement layer, a second metallic reinforcement layer with a deformable helicoidal structure and surrounding the first layer, and an outer continuous layer made of the same flexible polymeric material than the inner tube, are arranged.

In essence, the hose object of the invention, is characterized in that between the second metallic reinforcement layer and the outer layer a plurality of deformable metallic filiform elements are circumferentially arranged, which extends along the hose with the capacity to move in the axial direction of the hose and with the capacity for plastic deformation, such that the hose is susceptible of deforming under the application of a force and of maintaining said deformation once said force is no longer applied.

According to one characteristic of the invention, the plurality of filiform elements is arranged on a third layer of the same flexible polymeric material of the inner tube that is arranged next to the second metallic reinforcement layer with a helicoidal structure.

According to another characteristic of the invention, the first reinforcement layer and the second metallic reinforcement layer with a helicoidal structure are embedded in the third layer of flexible polymeric material.

According to another characteristic of the invention, the ends of the metallic filiform elements are provided with respective covers of a polymeric or a metallic material within and along the length of which the ends of the filiform elements are capable of sliding.

According to another characteristic of the invention, the covers are coupled in a fixed manner to the third layer of flexible polymeric material through attachment means. Preferably, the covers are made of polytetrafluoroethylene or a polymeric material with a friction coefficient, hardness, flexibility and temperature resistance similar to that of polytetrafluoroethylene.

According to another characteristic of the invention, the deformable metallic filiform elements are made of iron wire with a resistance to traction comprised between 350 and 550 N/mm², and preferably, the iron wire is provided with a zinc coating. Also preferably, the deformable metallic filiform elements are made of stainless steel, with a minimum value of the resistance to traction of 580 N/mm².

Also preferably, the second metallic reinforcement layer with a deformable helicoidal structure is made of the same material than the filiform elements.

In consonance with another characteristic of the invention, the first concentric reinforcement layer is made of a polymeric material of polyester, of aramid or of glass fiber, with a braided or a weft structure.

According to another characteristic of the invention, the flexible polymeric material of which the inner tube is made, is silicone.

In line with a second aspect of the invention, a manufacturing method is disclosed for a flexible tubular hose intended for the transport of fluids in industrial installations based on a inner tube made of a flexible polymeric material on which a first concentric reinforcement layer, and a second metallic reinforcement layer with a deformable helicoidal structure, surrounding the first layer, have been arranged in an orderly manner.

The method is characterized in that it comprises the following steps:
a) covering the entirety of the length of the helicoidal metallic reinforcement of the second layer with the same flexible polymeric material of which the inner tube is made, forming a third layer;
b) arranging on the third layer and along the length of the inner tube covered with that third layer, a plurality of deformable metallic filiform elements, provided with respective covers made of a metallic or a polymeric material within and along which the ends of the filiform elements are capable of sliding;
c) attaching the covers of the ends of the filiform elements to the surface of the third layer through attachment means; and
d) arranging an outer layer of the same flexible polymeric material of which the inner tube is made, covering the plurality of the filiform elements, the covers thereof and the attachment means.

According to another characteristic of the method of the invention, the flexible polymeric material of which the inner tube, the third layer and the outer layer are made is silicone, and steps a) and d) comprise the vulcanization of the silicone at a temperature comprised between 160 °C and 200 °C.

In consonance with another characteristic of the method of the invention, step c) consists in placing the covers on the third layer and fastening the same to this layer by wrapping around a resistant wire as attachment means.

In line with another characteristic of the method of the invention, the wire is composed of polymeric fibers from the group formed by aramid, polyester and polyparaphenylene terephthalamide fibers.

According to a variant of the method of the invention, the covers are made of polytetrafluoroethylene or of a polymeric material with a friction coefficient, hardness, flexibility and temperature resistance similar to that of polytetrafluoroethylene.

In consonance with another characteristic of the method of the invention, the deformable metallic filiform elements are made of iron wire with a resistance to traction comprised between 350 and 550 N/mm², and preferably, the iron wire is provided with a zinc coating. In an alternative way, the deformable metallic filiform elements are made of stainless steel, preferably with a minimum value of the resistance to traction of 580 N/mm².

In line with another characteristic of the method of the invention, the second metallic reinforcement layer with a deformable helicoidal structure is made of the same material than the filiform elements.

According to another characteristic of the method of the invention, the first concentric reinforcement layer is made of a polymeric material of polyester, aramid or glass fiber, with a braided or a weft structure.

### Brief description of the drawings

In the drawings attached below, a preferred embodiment of the flexible tubular hose object of the invention is illustrated as a non-limitative example. In said drawings:
Fig. 1 is a longitudinal sectional view of an end segment of the hose object of the invention;
Fig. 2 is a longitudinal sectional view of an intermediate segment of the hose object of the invention;
Fig. 3 is a sectional view of the hose object of the invention according to cut A-A of Fig. 1;
Fig. 4 is a sectional view of the hose object of the invention according to cut B-B of Fig. 2;
Fig. 5 is a view of the flexible tubular hose object of the invention with a certain shape acquired by its plastic deformation capacity.

### Detailed description of the drawings

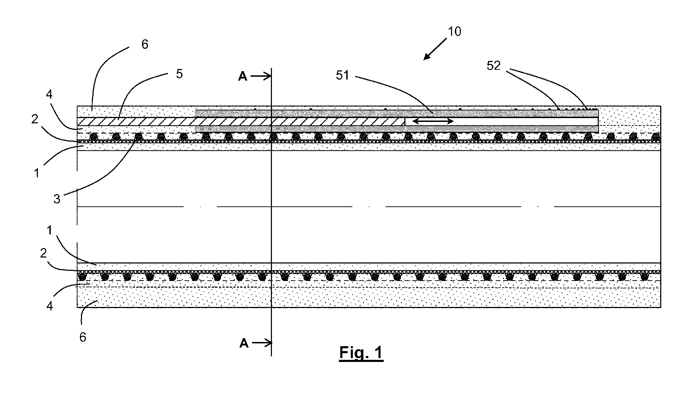

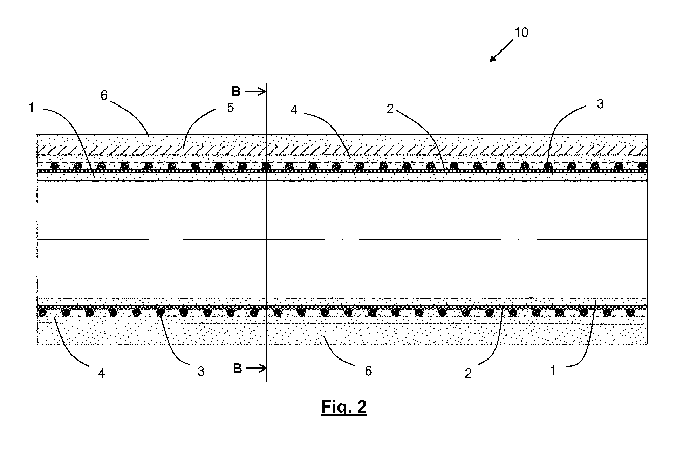

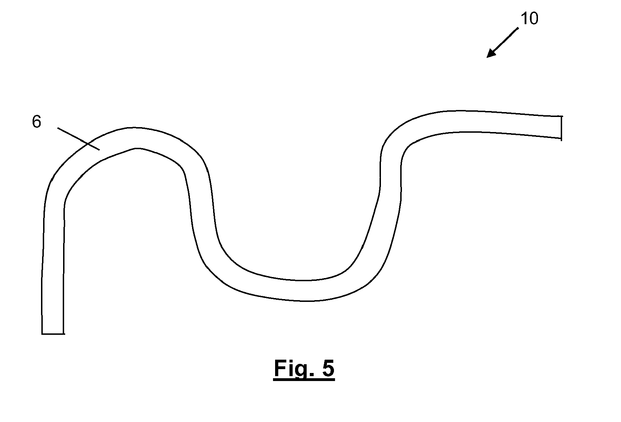

Fig. 1 shows a longitudinal sectional view of the right end segment of a flexible tubular hose 10 intended for the transport of fluids in industrial installations, while Fig. 2 represents a longitudinal section of an intermediate segment. The hose 10 can be manufactured with an industrial quality or with a food quality, depending on the sector and on the kind of fluid which is conducted. The hose 10 initially presents a straight shape and has the particularity that it can take on any particular shape if subjected to a force with the hands giving it that particular shape, maintaining the shape provided once the force is no longer applied, for example, a shape as the one represented in Fig. 5.

The following arrangement of layers is shown from the interior to the exterior of the hose 10. In the first place, the hose is formed by an inner tube 1 of a flexible polymeric material, particularly silicone, which forms the inner watertight surface of the hose. The inner tube 1 may be manufactured by adhering a silicone plate with a certain thickness to a mandrel. Alternatively, the inner tube 1 can also be manufactured by means of an extrusion process.

On the inner tube, a first concentric reinforcement layer 2 of another polymeric material is arranged, preferably polyester wire with a braided structure. However, this first reinforcement layer 2 can be made of a different material such as aramid or glass fiber, and also can have a weft structure instead of a braided structure.

Next, a second metallic reinforcement layer 3 with a deformable helicoidal structure and surrounding the first layer 2 is arranged. This second layer 3 is formed by a wire spiral covering the first layer 2. The diameter of the wire depends on the diameter of the hose 10 and the metal material of the wire may be, among others, iron or stainless steel. As an example, the diameter of a stainless steel wire can be of 1 mm approximately with a pitch of 4 mm.

Next, over the second metallic reinforcement layer 3, a third layer 4 covering the entire second layer 3 and extending from one end to the other of the hose 10 is arranged. The third layer 4 is made of the same flexible polymeric material than the inner tube 1, that is to say, silicone, and in the hose 10 represented herein, it has a thickness similar to that of the inner tube 1.

On the third silicone layer 4, a plurality of deformable metallic filiform elements 5 is circumferentially arranged and extends along the hose 10 with the capacity to move in the axial direction of the hose 10. The metallic filiform elements 5 have a plastic deformation capacity that allows the hose 10 to deform under the application of a force, applied, for example, by the assembler of the installation, and that the hose 10 can maintain said deformation once the force is no longer applied.

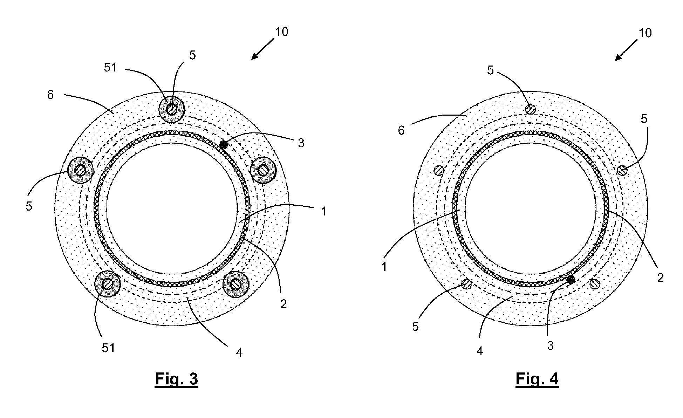

Specifically, as observed in Figs. 3 and 4, the filiform elements 5, which are five in total in the example represented therein, are formed by essentially straight rods and their diameter is, in the majority of the cases, usually similar or slightly greater than the diameter of the metallic reinforcement of the helicoidal structure of the second layer 3. For example, for a hose 10 with an inner diameter of 20 mm, the diameter of the filiform elements 5 can be comprised between 1 and 2 mm. Preferably, the filiform elements 5 are made of zinc-coated galvanized steel wire. The resistance to traction of the iron wire described above is comprised between 350 and 550 N/mm², preferably between 400 and 500 N/mm². Advantageously, the material of the metallic reinforcement with a helicoidal structure of the second layer 3 can be made of the same iron wire than the filiform elements 5. However, other likewise suitable metal materials to be plastically deformed under the effect of the force of the assembler of the hose 10 are not ruled out for the filiform elements 5.Thus, the filiform elements 5 can be of any other type of iron or even stainless steel (like stainless steel 304) suitable for performing the function intended to the filiform elements 5. Approximately, the minimum value of the resistance to traction of the considered stainless steel is of 580 N/mm².

In order for the hose 10 to be folded along its length in several directions by virtue of the force applied by the assembler of the installation and maintain the shape acquired once the force is no longer applied, the filiform elements 5 must be capable of moving along the length of the hose 10. To achieve the foregoing, the metallic filiform elements 5 are provided with respective covers 51 within and along which the ends of the filiform elements 5 are capable of sliding, as represented by the double-ended arrows of Fig. 1 inside the cover 51. This way, according to the direction of the curvature to which the filiform elements 5 are subjected, these will penetrate further in the interior of their respective covers or they will fall back. Preferably, the covers 51 are made of a polymeric material, and more preferably are made of polytetrafluorethylene (known as PTFE). However, a polymeric material with a friction coefficient, hardness, flexibility and temperature resistance similar to that of polytetrafluoroethylene may be used instead of PTFE and even metallic covers 51 can be considered as long as they can act in the same way.

The covers 51 are attached to the surface of the third silicone layer 4 through attachment means 52. The attachment means 52 may be formed by resistant wires wrapped around the third layer 4 in order for the covers 51 to be attached in the end areas of the hose 10, further being able to avoid that the filiform elements 5 come out of the ends of the covers 51 which are closer to those end areas of the hose 10 by blocking said ends. Preferably, the resistant wire is composed of polymeric fibers such as aramid, polyester and polyparaphenylene terephthalamide fibers (commercially known as Kevlar®). With this arrangement of covers 51 and attachment means 52, the filiform elements 5 can move longitudinally without protruding through the ends of the hose 10. With regard to the dimensions of the hose 10, by way of guidance and without implying any restriction, for a diameter of 16 mm it is considered a minimum length of 250 mm, whereas for a diameter of 32 mm the minimum length will be of 550 mm.

Finally, above the filiform elements 5, the covers 51 and the attachment elements 52, the last silicone layer is arranged, which constitutes the outer layer 6 of the hose 10. Generally, the outer layer 6 is the thickest layer of the hose 10 (except for the segments in which the covers 51 are coated). The hardness of the silicone in the outer layer 6 and in the third layer 4 is comprised between 20 and 80 shore A, preferably between 50 and 55 shore A.

It should be noted that in the manufacturing method of the hose 10, the inner tube 1 is preferably obtained by means of the vulcanization of the silicone for approximately 15 minutes at a temperature of 180 °C. For the rest of the silicone layers, that is to say, for the third layer 4 and the outer layer 6, a single vulcanization process is carried out once the rest of layers making up the hose 10 is assembled, during which a temperature of 180 °C is applied for approximately 40 minutes, with which the hose 10 acquires the appropriate characteristics of resistance and deformability for the use thereof in industrial installations. The resulting hose 10 is easy to assemble, including the installation thereof in inaccessible areas, and has a good resistance to pressure. Likewise, the hose 10 is a simple and economical solution (does not require the manufacturing of specific molds) in those cases where the hose 10 needs to have a special shape due to the project layout for the installation and also when its shape needs to be adapted with respect to any eventuality that could occur during the assembly, such as overcoming unforeseen obstacles in the project or adapting to changes arising during the assembly of the industrial installation.

## Claims

1. Flexible tubular hose (10) intended for the transport of fluids in industrial installations, comprising an inner tube (1) of a flexible polymeric material forming the inner watertight surface of the hose, on which at least a first concentric reinforcement layer (2), a second metallic reinforcement layer (3) with a deformable helicoidal structure and surrounding the first layer (2), and an outer continuous layer (6) of the same flexible polymeric material than the inner tube (1) are arranged, **characterized in that** between the second metallic reinforcement layer (3) and the outer layer (6) a plurality of deformable metallic filiform elements (5) is circumferentially arranged and extends along the hose with the capacity to move in the axial direction of the hose and with the capacity for plastic deformation, such that the hose is susceptible of deforming under the application of a force and of maintaining said deformation once said force is no longer applied.

2. Flexible tubular hose (10) according to claim 1, wherein the plurality of filiform elements (5) is arranged on the third layer (4) of the same flexible polymeric material of the inner tube (1) that is arranged next to the second metallic reinforcement layer (3) with a helicoidal structure.

3. Flexible tubular hose (10) according to claim 2, wherein the first reinforcement layer (2) and the second metallic reinforcement layer (3) with a helicoidal structure are embedded in the third layer (4) of flexible polymeric material.

4. Flexible tubular hose (10) according to claim 2 or 3, wherein the ends of the metallic filiform elements (5) are provided with respective covers (51) of a polymeric or a metallic material within and along the length of which the ends of the filiform elements (5) are capable of sliding.

5. Flexible tubular hose (10) according to claim 4, wherein the covers (51) are coupled in a fixed manner to the third layer (4) of flexible polymeric material through attachment means (52).

6. Flexible tubular hose (10) according to claim 4 or 5, wherein the covers (51) are made of polytetrafluoroethylene or of a polymeric material with a friction coefficient, hardness, flexibility and temperature resistance similar to that of polytetrafluoroethylene.

7. Flexible tubular hose (10) according to any one of the preceding claims, wherein the deformable metallic filiform elements (5) are made of iron wire, preferably provided with a zinc coating, with a resistance to traction comprised between 350 and 550 N/mm², or are made of stainless steel with a minimum value of the resistance to traction of 580 N/mm².

8. Flexible tubular hose (10) according to claim 7, wherein the second metallic reinforcement layer (3) with a deformable helicoidal structure is made of the same material than the filiform elements (5).

9. Flexible tubular hose (10) according to any one of the preceding claims, wherein the first concentric reinforcement layer (2) is made of a polymeric material of polyester, of aramid or of glass fiber, with a braided or a weft structure.

10. Flexible tubular hose (10) according to any one of the preceding claims, wherein the flexible polymeric material of which the inner tube (1) is made is silicone.

11. Method of manufacturing of a flexible tubular hose (10) intended for the transport of fluids in industrial installations, based on a inner tube (1) made of a flexible polymeric material on which a first concentric reinforcement layer (2) and a second metallic reinforcement layer (3) with a deformable helicoidal structure surrounding the first layer, have been arranged in an orderly manner, **characterized in that** it comprises the following steps:
a) covering the entirety of the length of the helicoidal metallic reinforcement of the second layer (3) with the same flexible polymeric material of which the inner tube (1) is made, forming a third layer (4);
b) arranging on the third layer and along the length of the inner tube (1) covered with that third layer, a plurality of deformable metallic filiform elements (5), provided with respective covers (51) made of a metallic or a polymeric material within and along which the ends of the filiform elements (5) are capable of sliding;
c) attaching the covers (51) of the ends of the filiform elements (5) to the surface of the third layer (4) through attachment means (52); and
d) arranging an outer layer (6) of the same flexible polymeric material of which the inner tube (1) is made, covering the plurality of the filiform elements (5), the covers (51) thereof and the attachment means (52).

12. Method according to claim 11 for manufacturing a flexible tubular hose (10), wherein the flexible polymeric material of which the inner tube (1), the third layer (4) and the outer layer (6) are made is silicone, and steps a) and d) comprise the vulcanization of the silicone at a temperature comprised between 160 °C and 200 °C.

13. Method according to claim 13 for manufacturing a flexible tubular hose (10), wherein step c) consists in placing the covers (51) on the third layer (4) and fastening the same to this layer by wrapping around a resistant wire as attachment means, which is preferably composed of polymeric fibers from the group formed by aramid, polyester and polyparaphenylene terephthalamide fibers.

14. Method according to any one of the claims 11 to 13 for manufacturing a flexible tubular hose (10), wherein covers (51) are made of polytetrafluoroethylene or of a polymeric material with a friction coefficient, hardness, flexibility and temperature resistance similar to that of polytetrafluoroethylene.

15. Method according to any one of the claims 12 to 16 for manufacturing a flexible tubular hose (10), wherein the deformable metallic filiform elements are made of stainless steel with a minimum value of the resistance to traction of 580 N/mm² or of iron wire, preferably provided with a zinc coating, with a resistance to traction comprised between 350 and 550 N/mm², wherein the second metallic reinforcement layer (3) with a deformable helicoidal structure is made of the same material than the filiform elements (5), and wherein the first concentric reinforcement layer (2) is made of a polymeric material of polyester, of aramid or of glass fiber, with a braided or a weft structure.
